# EUROPEAN PATENT SPECIFICATION

(11) **EP 3 971 112 B1**
(45) Date of publication and mention of the grant of the patent: **17.07.2024**
(21) Application number: 20808890.6
(22) Date of filing: 28.02.2020
(51) Int. Cl.: G05B 19/418, B23Q 7/14, B23Q 11/00

(54) **TRANSPORT SYSTEM**
TRANSPORTSYSTEM
SYSTÈME DE TRANSPORT

(30) Priority: 17.05.2019 JP 2019093835
(43) Date of publication of application: 23.03.2022
(73) Proprietor: Makino J Co., Ltd., Aiko-gun Kanagawa 243-0303 (JP)
(72) Inventor: MURAKAMI, Noboru, Aiko-gun, Kanagawa 243-0303 (JP)
(74) Representative: Lavoix
(86) International application number: PCT/JP2020/008499
(87) International publication number: WO 2020/235171

(56) References cited:
- JP-A- 2004 123 350
- JP-A- 2012 076 858
- JP-A- 2016 000 631
- JP-A- 2016 153 163
- JP-A- 2016 216 135
- JP-B2- 3 925 570
- US-A1- 2015 360 874

## Description

### FIELD

The present disclosure relates to a conveyance system.

### BACKGROUND

Conventionally, systems comprising a conveyance device for conveying a workpiece to a processing machine are known. For example, Patent Literature 1 discloses a system comprising a loader which conveys a workpiece acquired from a workpiece feeder to a machine tool. The loader supplies the workpiece from the workpiece feeder to the machine tool, and conveys the workpiece from the machine tool to a removal location. The loader is controlled by a loader controller. When a plurality of identical workpieces are machined in the machine tool, in an initial cycle, the loader controller measures the time required for the machine tool to complete the machining of the workpiece (i.e., a loader standby time). The loader controller moves the loader at an acceleration/deceleration time constant and a maximum speed corresponding to the measured standby time in the second and subsequent cycles. With such a configuration, it is possible to prevent decreases in the operating efficiency of the loader and decreases in machining accuracy due to vibrations caused by high-speed movements and high acceleration/deceleration of the loader.

### [CITATION LIST]

### [PATENT LITERATURE]

[PTL 1] Japanese Patent No. 3925570
[PTL 2] US Patent Application US 2015/360874 A1

### SUMMARY

### [TECHNICAL PROBLEM]

The system of Patent Literature 1 (Japanese Patent No. 3925570) is advantageous when a plurality of identical workpieces are machined, as described above, since the machining time is the same in each cycle. However, when the machining time is different in each cycle (for example, when the system handles a wide variety of machined products), there is a risk that the system of Patent Literature 1 may be ineffective.

Patent literature 2 (US Patent Application US 2015/360874 A1) presents a conveyance system for machining apparatus.

In consideration of such problems, the present invention aims to provide a conveyance system which enables a conveyance device to autonomously switch operations depending on the situation.

One aspect of the present disclosure provides a conveyance system for conveying a workpiece between a storage shelf and a plurality of processing machines, the conveyance system comprising (i) a main controller which receives a conveyance request for a workpiece from the plurality of processing machines, the main controller retaining the received conveyance request and transmitting a standby signal indicating whether or not a plurality of conveyance requests are retained in the main controller, and (ii) a conveyance device which conveys the workpiece between the storage shelf and the plurality of processing machines, the conveyance device comprising a carriage which moves between the storage shelf and the plurality of processing machines, and a local controller for controlling the carriage, wherein the local controller of the conveyance device is configured to receive the standby signal from the main controller, move the carriage in accordance with a first traveling control parameter when the standby signal indicates that a plurality of conveyance requests are retained in the main controller, and move the carriage in accordance with a second traveling control parameter, which moves the carriage more slowly than when moved in accordance with the first traveling control parameter, when the standby signal indicates that a plurality of conveyance requests are not retained in the main controller.

In the conveyance system according to the aspect of the present disclosure, when the main controller commands a subsequent conveyance to the conveyance device, a standby signal indicating whether or not a plurality of conveyance requests are retained in the main controller is transmitted to the local controller of the conveyance device. The local controller which received the standby signal moves the carriage in accordance with a first traveling control parameter when the standby signal indicates that a plurality of conveyance requests are retained in the main controller, and moves the carriage more slowly in accordance with a second traveling control parameter when the standby signal indicates that a plurality of conveyance requests are not retained in the main controller. Thus, the movement of the carriage is controlled only depending on whether or not a plurality of conveyance requests are retained in the main controller. Therefore, when a plurality of workpieces having different machining times are machined, the movement of the carriage can be controlled according to only the busy status of the conveyance system without considering the machining time of each workpiece. Thus, the conveyance device can autonomously switch the operation depending on the situation. Furthermore, when the conveyance system is not busy, the load on the conveyance device can be reduced by moving the carriage more slowly in accordance with the second traveling control parameter.

The standby signal may indicate only whether or not there is a second conveyance request at the time point at which the standby signal is sent by the main controller. In this case, for example, only one bit of data can be used, specifying 1 when there is a second conveyance request, and specifying 0 when there is no second conveyance request. Thus, increases in the amount of data transmitted from the main controller to the local controller can be minimized, and complicated processing can be avoided.

The first and second traveling control parameters may include a parameter of acceleration/deceleration of the carriage. When accelerating or decelerating, a large moment is exerted on the components of the conveyance device. Thus, by adjusting the acceleration/deceleration parameter of the carriage, the load on the conveyance device can be more efficiently reduced.

### SUMMARY

The invention is defined by the conveyance system of independent claim 1. Optional aspects of the invention are presented in the dependent claims.

### BRIEF DESCRIPTION OF DRAWINGS

FIG. 1 is a schematic top view showing a production system comprising a conveyance system according to an embodiment.
FIG. 2 is a schematic side view showing the production system of FIG. 1.
FIG. 3 shows an example of a conveyance request for a workpiece retained in a main controller.
FIG. 4 shows an example of a conveyance request for a workpiece retained in a main controller.
FIG. 5 shows an example of a conveyance request for a workpiece retained in a main controller.
FIG. 6 is a flowchart showing conveyance system operations.

### DESCRIPTION OF EMBODIMENTS

The conveyance system according to an embodiment will be described below with reference to the attached drawings. Identical or corresponding elements have been assigned the same reference signs, and duplicate descriptions thereof have been omitted. To facilitate understanding, the scales of the drawings have been modified in some cases.

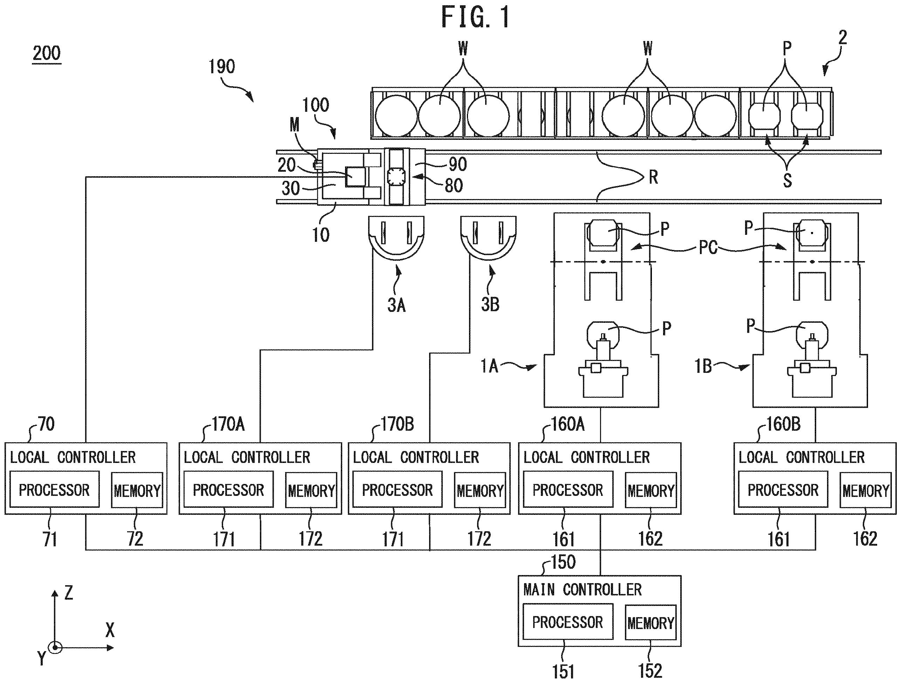

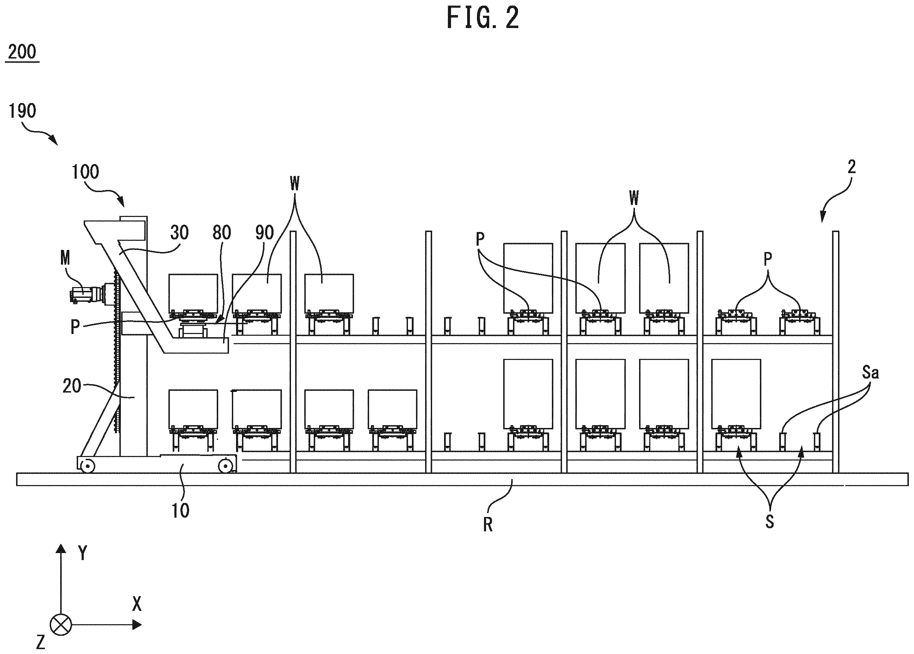

FIG. 1 is a schematic top view showing a production system 200 comprising a conveyance system 190 according to an embodiment, and FIG. 2 is a schematic side view showing the production system 200 of FIG. 1. Referring to FIG. 1, in the production system 200, workpieces W are conveyed between a pallet stocker (storage shelf) 2, processing machines 1A, 1B, and workpiece setup stations (WSS; hereinafter also referred to simply as "stations") 3A, 3B by the conveyance system 190. The production system 200 may handle a wide variety of machined products having, for example, different machining times. Referring to FIG. 2, the workpieces W may be attached to, for example, pallets P, and the pallets P may be carried by a conveyance device 100. In another embodiment, the workpieces W may be directly carried by the conveyance device 100. Referring to FIG. 1, the production system 200 comprises a plurality of processing machines 1A, 1B, the pallet stocker 2, the stations 3A, 3B, and the conveyance system 190. The production system 200 may further comprise other constituent elements. Note that in FIG. 2, in order to facilitate understanding, some components such as the processing machines 1A, 1B and the stations 3A, 3B are not shown.

Referring to FIG. 1, the processing machines 1A, 1B can be any of various types of machine tools, such as machining centers. For example, each processing machine 1A, 1B has a pallet changer PC which is capable of exchanging a pallet P having an unmachined workpiece W with a pallet P having a machined workpiece W. Furthermore, the processing machines 1A, 1B have respective local controllers 160A, 160B (which will be described in detail later) for controlling the processing machines 1A, 1B.

In the stations 3A, 3B, an operator can attach a workpiece W to a pallet P and can remove a workpiece W from a pallet P. The stations 3A, 3B have respective local controllers 170A, 170B (which will be described in detail later) for controlling the stations 3A, 3B.

Referring to FIG. 2, the pallet stocker 2 can house pallets P with or without a workpiece W. The pallet stocker 2 has a plurality of stock areas S (two rows × 10 columns in FIG. 2) having differing heights for housing pallets P. For example, each stock area S can have a pair of leg members Sa for supporting the pallets P.

The conveyance system 190 comprises the conveyance device 100 and a main controller 150. The conveyance device 100 comprises a carriage 10, a support column 20, a lifting device 30, a loading platform 90, and a slide device 80. Furthermore, referring to FIG. 1, the conveyance device 100 comprises a local controller 70 for controlling the various constituent elements of the conveyance device 100. The conveyance device 100 may further comprise other constituent elements.

The carriage 10 is configured so as to travel horizontally along rails R, and can move between the pallet socker 2, the processing machines 1A, 1B, and the stations 3A, 3B. In the present embodiment, the carriage 10 travels along two rails R. In another embodiment, the carriage 10 may travel along a single rail R. The carriage 10 can be driven by, for example, a servomotor (not illustrated). The driving of the servomotor (i.e., the X direction traveling of the carriage 10) can be controlled by the local controller 70.

Regarding the coordinate axes with respect to the conveyance device 100, the axis parallel to the direction in which the carriage 10 moves (also referred to as the "forward-rearward directions") is the X-axis (also referred to as the "travel axis"). With respect to the support column 20, the side on which the loading platform 90 is present is the "front", and the side opposite thereto is the "rear." Among horizontal directions, the direction orthogonal to the front-rear direction is the left-right direction, and the axis parallel to the left-right direction (i.e., the horizontal axis orthogonal to the X-axis) is the Z-axis (also referred to as the "transfer axis"). The axis parallel to the vertical direction (also referred to as the "up-down directions") is the Y-axis (also referred to as the "elevation axis").

The support column 20 protrudes vertically upward from the carriage 10. The lifting device 30 moves in the up-down directions along the support column 20. The lifting device 30 is driven by a motor M. The motor M can be, for example, a servomotor. The driving of the motor M (i.e., the Y direction movement of the lifting device 30) can be controlled by the local controller 70. The loading platform 90 is supported by the lifting device 30 and is moved in the up-down directions by the lifting device 30.

The slide device 80 is provided on the loading platform 90. The slide device 80 has one or a plurality of slide members which move in the left-right directions relative to the loading platform 90, and which can access the processing machines 1A, 1B, the pallet stocker 2, and the stations 3A, 3B. The slide device 80 has a fork which is capable of engaging with pallets P. The slide members can be driven by, for example, a servomotor (not illustrated). The driving of the servomotor (i.e., the Z direction movement of the slide device 80) can be controlled by the local controller 70.

The local controller 70 is capable of communicating by wire or wirelessly with the motors for driving the carriage 10, the lifting device 30, and the slide device 80, and is configured so as to control the carriage 10, the lifting device 30, and the slide device 80. The local controller 70 may further control other constituent elements of the conveyance device 100 (which will be described in detail later).

The main controller 150 is capable of communicating by wire or wirelessly with each of the local controllers described above, and is configured so as to control all conveyance in the production system 200 (which will be described in detail later).

Next, the main controller 150 and the local controllers 70, 160A, 160B, 170A, 170B will be described in detail.

The local controllers 70, 160A, 160B, 170A, 170B each comprise a processor (for example, a CPU (Central Processing Unit)) 71, 161, 171, and a memory (for example, a hard disk drive) 72, 162, 172. Furthermore, the local controllers 70, 160A, 160B, 170A, 170B can each comprise other constituent elements such as ROM (read-only memory), RAM (random access memory), and an input device and/or output device (for example, mouse, keyboard, liquid crystal display, and/or touch panel, etc.), and the constituent elements of each local controller can be connected to each other via busses or the like. The processors 71, 161, 171 can execute various processes, including the processes described below, in accordance with programs stored in, for example, the memories 72, 162, 172. The memories 72, 162, 172 can store various data including various programs used by the processors 71,161,171. The main controller 150, in the same manner as the local controllers, can comprise, for example, a processor 151 and a memory 152, and can comprise other constituent elements such as ROM, RAM and an input device and/or output device.

Each of the local controllers 160A, 160B of the processing machines 1A, 1B can transmit, for example, prior to machining, a workpiece W conveyance request to the main controller 150 to convey a workpiece W from the pallet stocker 2 or the stations 3A, 3B to the pallet changer PC. Furthermore, each of the local controllers 160A, 160B can transmit, after machining, a workpiece W conveyance request to the main controller 150 to convey the workpiece W from the pallet changer PC to the pallet stocker 2 or the stations 3A, 3B.

Each of the local controllers 170A, 170B of the stations 3A, 3B can transmit a workpiece W conveyance request to the main controller 150 to convey, for example, prior to attachment of the workpiece W to the pallet P, an empty pallet P from the pallet stocker 2 to the stations 3A, 3B. Furthermore, each of the local controllers 170A, 170B of the stations 3A, 3B, after attachment of the workpiece W to the pallet P, can transmit a workpiece W conveyance request to the main controller 150 to convey the workpiece W from the stations 3A, 3B to the pallet stocker 2 or the processing machines 1A, 1B.

The main controller 150 receives the conveyance requests described above, which are transmitted from the local controllers 160A, 160B, 170A, 170B. The main controller 150 retains the received conveyance requests in, for example, a storage device such as the memory 152. When a plurality of conveyance requests are retained, the main controller 150 may, for example, retain the conveyance requests in the order in which they are received, or when necessary, may change the order of the conveyance requests.

The main controller 150 transmits data necessary for a subsequent conveyance to the local controller 70 of the conveyance device 100. Specifically, the main controller 150 transmits, for example, a conveyance source and conveyance destination of a workpiece W of a subsequent conveyance request (a first conveyance request at the time point at which the standby signal is transmitted) to the local controller 70. Simultaneously, the main controller 150 transmits a standby signal indicating whether or not a plurality of conveyance requests are retained in the main controller 150 to the local controller 70. Specifically, the standby signal represents only whether or not there is a second conveyance request at the time point at which the standby signal is transmitted. More specifically, the main controller 150 uses only one bit for the standby signal, specifying 1 when there is a second conveyance request, and specifying 0 when there is no second conveyance request. The main controller may delete the corresponding conveyance request from the storage device after the above data necessary for a subsequent conveyance has been transmitted to the local controller 70 or after a conveyance complete signal has been received from the local controllers 160A, 160B, 170A, 170B.

The local controller 70 of the conveyance device 100 receives the above data transmitted from the main controller 150. The local controller 70 moves the carriage 10 in accordance with a first traveling control parameter when the standby signal indicates that a plurality of conveyance requests are retained in the main controller 150 at the time of a subsequent conveyance. For example, the first traveling control parameter may be intended to be used in normal traveling of the carriage 10. Furthermore, the local controller 70 moves the carriage 10 in accordance with a second traveling control parameter, by which the carriage 10 moves more slowly than when moved in accordance with the first traveling control parameter, when the standby signal indicates that a plurality of conveyance requests are not retained in the main controller 150 at the time of a subsequent conveyance. By moving the carriage 10 in accordance with the second traveling control parameter, the load on the conveyance device 100 can be reduced as compared with the case in which the carriage 10 is moved in accordance with the first traveling control parameter. Specifically, the first and second traveling control parameters may include a parameter related to the acceleration/deceleration of the carriage 10. More specifically, the first and second traveling control parameters may be acceleration in the acceleration/deceleration operations of the carriage 10. Specifically, the acceleration of the second traveling control parameter (which can also be referred to as deceleration in deceleration operations) is lower than the acceleration of the first traveling control parameter. The first and second control parameters can be stored in advance in a storage device such as the memory 72.

Next, the operations of the conveyance system 190 will be described.

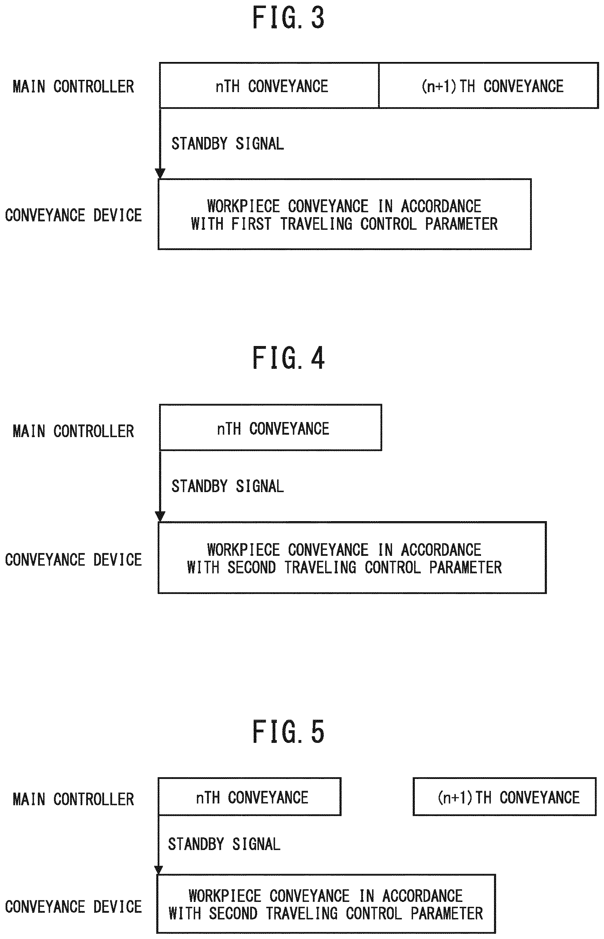

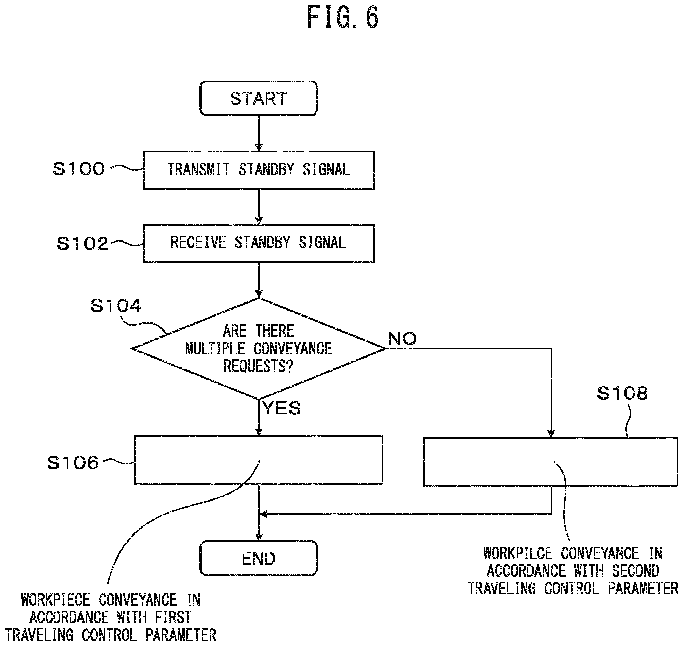

FIGS. 3, 4, and 5 show examples of workpiece W conveyance requests retained in the main controller 150, and FIG. 6 is a flowchart showing the operations of the conveyance system 190. Referring to FIG. 3, in this example, at the time point at which the standby signal is transmitted from the main controller 150 to the local controller 70 of the conveyance device 100, an nth conveyance request (a first conveyance request at the time point at which the standby signal is transmitted) and an (n+1)th conveyance request (a second conveyance request at the time point at which the standby signal is transmitted) are retained in the main controller 150.

In this case, referring to FIG. 6, the processor 151 of the main controller 150 transmits data including the conveyance source and conveyance destination of the nth conveyance request and the standby signal to the local controller 70 of the conveyance device 100 (step S100), and the transmitted data is received by the local controller 70 (step S102). Next, a processor 71 of the local controller 70 determines whether or not the received standby signal indicates that a plurality of conveyance requests are retained in the main controller 150 (step S104). In the example of FIG. 3, as described above, since the nth and (n+1)th conveyance requests are retained in the main controller 150 at the time point at which the standby signal is transmitted, it is determined in step S104 that a plurality of conveyance requests are retained in the main controller 150. Thus, the processor 71 moves the carriage 10 in accordance with the first traveling control parameter, conveys a workpiece W from the conveyance source to the conveyance destination, which are included in the received data (step S106), and ends the series of operations.

Referring to FIG. 4, in this example, only an nth conveyance request is retained in the main controller 150 at the time point at which the standby signal is transmitted from the main controller 150 the local controller 70.

In this case, referring to FIG. 6, the processor 151 transmits data including the conveyance source and conveyance destination of the nth conveyance request and the standby signal to the local controller 70 (step S100), and the transmitted data is received by the local controller 70 (step S102). Next, the processor 71 of the local controller 70 determines whether or not the received standby signal indicates that a plurality of conveyance requests are retained in the main controller 150 (step S104). In the example of FIG. 4, as described above, since only the nth conveyance request is retained in the main controller 150 at the time point at which the standby signal is transmitted, it is determined in step S104 that a plurality of conveyance requests are not retained in the main controller 150. Thus, the processor 71 moves the carriage 10 in accordance with the second traveling control parameter, conveys the workpiece W from the conveyance source to the conveyance destination, which are included in the received data (step S108), and ends the series of operations.

Referring to FIG. 5, in this example, only the nth conveyance request is retained in the main controller 150 at the time point at which the standby signal is transmitted from the main controller 150 to the local controller 70, and when the conveyance device 100 moves based on the nth conveyance request, an (n+1)th conveyance request is received by the main controller 150.

In this case, referring to FIG. 6, the processor 151 transmits data including the conveyance source and conveyance destination of the nth conveyance request and the standby signal to the local controller 70 (step S100), and the transmitted data is received by the local controller 70 (step S102). Next, the processor 71 of the local controller 70 determines whether or not the received standby signal indicates that a plurality of conveyance requests are retained in the main controller 150 (step S104). In the example of FIG. 5, as described above, since only the nth conveyance request is retained in the main controller 150 at the time point at which the standby signal is transmitted, in step S104, it is determined that a plurality of conveyance requests are not retained in the main controller 150. Thus, the processor 71 moves the carriage 10 in accordance with the second traveling control parameter, conveys a workpiece W from the conveyance source to the conveyance destination, which are included in the received data (step S108), and ends the series of operations.

In the conveyance system 190 as described above, when the main controller 150 commands a subsequent conveyance to the conveyance device 100, a standby signal indicating whether or not a plurality of conveyance requests are retained in the main controller 150 is transmitted to the local controller 70 of the conveyance device 100. The local controller 70 which received the standby signal moves the carriage 10 in accordance with the first traveling control parameter when the standby signal indicates that a plurality of conveyance requests are retained in the main controller 150, and moves the carriage 10 more slowly in accordance with the second traveling control parameter when the standby signal indicates that a plurality of conveyance requests are not retained in the main controller 150. Thus, the movement of the carriage 10 is controlled in accordance with only whether or not a plurality of conveyance requests are retained in the main controller 150. Therefore, when a plurality of workpieces W having different machining times are machined, the movement of the carriage 10 can be controlled only according to the busy situation of the conveyance system 190 without considering the machining time of each workpiece W. Thus, the conveyance device 100 can autonomously switch operations in accordance with the situation. Furthermore, when the conveyance system 190 is not busy, the load on the conveyance device 100 can be reduced by moving the carriage 10 more slowly in accordance with the second traveling control parameter.

Furthermore, in the conveyance system 190, the standby signal indicates only whether or not there is a second conveyance request at the time point at which the main controller 150 transmits the standby signal. Thus, only one bit of data can be used, specifying 1 when there is a second conveyance request, and specifying 0 when there is no second conveyance request. Thus, increases in the amount of data transmitted from the main controller 150 to the local controller 70 can be minimized, and complicated processing can be avoided.

Furthermore, in the conveyance system 190, the first and second traveling control parameters include parameters of acceleration/deceleration of the carriage 10, and specifically, acceleration in the acceleration/deceleration operations. During acceleration or deceleration, a large moment is exerted on the components of the conveyance device 100. Thus, by adjusting the acceleration/deceleration parameters of the carriage 10, the load on the conveyance device 100 can be reduced more efficiently.

Though the embodiments of the conveyance system have been described, the present invention is not limited to the above embodiments. A person skilled in the art would understand that various modifications can be made to the above embodiments. For example, in the above embodiments, the traveling control parameters include acceleration in the acceleration/deceleration operation of the carriage 10. However, in another embodiment, the traveling control parameters may include other parameters (for example, speed, jerk, etc., of the carriage 10).

Furthermore, in the above embodiments, the local controller 70 of the conveyance device 100 adjusts only the movement of the carriage 10 based on whether or not a plurality of conveyance requests are retained in the main controller 150. However, in another embodiment, the local controller 70 may further adjust at least one of the movement of the lifting device 30 and the slide device 80 in the same manner as the carriage 10. Specifically, the local controller 70 may raise and lower the lifting device 30 in accordance with a first lifting/lowering control parameter (for example, acceleration of the lifting device 30) when the standby signal indicates that a plurality of conveyance requests are retained in the main controller 150, and may raise and lower the lifting device 30 in accordance with a second lifting/lowering control parameter, in which the lifting device 30 is moved more slowly than the movement in accordance with the first lifting/lowering control parameter, when the standby signal indicates that a plurality of conveyance requests are not retained in the main controller 150. Likewise, the local controller 70 may advance and retract the slide device 80 in accordance with a first transfer control parameter (for example, acceleration of the slide device 80) when the standby signal indicates that a plurality of conveyance requests are retained in the main controller 150, and may advance and retract the slide device 80 by a second transfer control parameter, in which the slide device 80 moves more slowly than the movement in accordance with the first transfer control parameter, when the standby signal indicates that a plurality of conveyance requests are not retained in the main controller 150.

### DESCRIPTION OF REFERENCE SIGNS

- 1A: Processing Machine
- 1B: Processing Machine
- 2: Pallet Stocker (Storage Shelf)
- 10: Carriage
- 70: Local Controller
- 100: Conveyance Device
- 150: Main Controller
- 190: Conveyance System
- W: Workpiece

## Claims

1. A conveyance system (190) for conveying a workpiece (W) between a storage shelf (2) and a plurality of processing machines (1A, 1B), the conveyance system (190) comprising:
(i) a main controller (150) configured for receiving a conveyance request for a workpiece (W) from the plurality of processing machines (1A, 1B), the main controller (150) being configured for retaining the received conveyance request and transmitting a standby signal indicating whether or not a plurality of conveyance requests are retained in the main controller (150), and
(ii) a conveyance device (100) configured for conveying the workpiece (W) between the storage shelf (2) and the plurality of processing machines (1A, 1B), the conveyance device (100) comprising:
a carriage (10) configured for moving between the storage shelf (2) and the plurality of processing machines (1A, 1B), and
a local controller (70, 160A, 160B, 170A, 170B) for controlling the carriage (10), wherein
the local controller (70, 160A, 160B, 170A, 170B) of the conveyance device (100) is configured to:
receive the standby signal from the main controller (150),
move the carriage (10) in accordance with a first traveling control parameter when the standby signal indicates that a plurality of conveyance requests are retained in the main controller (150), and
move the carriage (10) in accordance with a second traveling control parameter, which moves the carriage (10) more slowly than when moved in accordance with the first traveling control parameter, when the standby signal indicates that a plurality of conveyance requests are not retained in the main controller (150).

2. The conveyance system according to claim 1, wherein the standby signal indicates only whether or not there is a second conveyance request at the time point at which the standby signal is sent.

3. The conveyance system according to claim 1, wherein the first and second traveling control parameters include a parameter of acceleration/deceleration of the carriage.

## Patentansprüche

1. Fördersystem (190) zum Fördern eines Werkstücks (W) zwischen einem Lagerregal (2) und einer Vielzahl von Bearbeitungsmaschinen (1A, 1B), wobei das Fördersystem (190) umfasst:
(i) eine Hauptsteuerung (150), die so konfiguriert ist, dass sie eine Förderanforderung für ein Werkstück (W) von der Mehrzahl von Bearbeitungsmaschinen (1A, 1B) empfängt, wobei die Hauptsteuerung (150) so konfiguriert ist, dass sie die empfangene Förderanforderung speichert und ein Bereitschaftssignal überträgt, das anzeigt, ob eine Mehrzahl von Förderanforderungen in der Hauptsteuerung (150) gespeichert ist oder nicht, und
(ii) eine Fördervorrichtung (100), die zum Fördern des Werkstücks (W) zwischen dem Lagerregal (2) und der Vielzahl von Bearbeitungsmaschinen (1A, 1B) konfiguriert ist, wobei die Fördervorrichtung (100) umfasst:
einen Schlitten (10), der so konfiguriert ist, dass er sich zwischen dem Lagerregal (2) und der Vielzahl von Verarbeitungsmaschinen (1A, 1B) bewegt, und
eine lokale Steuerung (70, 160A, 160B, 170A, 170B) zur Steuerung des Schlittens (10), wobei
die lokale Steuerung (70, 160A, 160B, 170A, 170B) der Fördervorrichtung (100) so konfiguriert ist, dass sie:
das Bereitschaftssignal von der Hauptsteuerung (150) empfängt,
den Schlitten (10) in Übereinstimmung mit einem ersten Fahrsteuerungsparameter, bewegt wenn das Bereitschaftssignal anzeigt, dass eine Vielzahl von Beförderungsanforderungen in der Hauptsteuerung (150) zurückgehalten werden, und
den Schlittens (10) in Übereinstimmung mit einem zweiten Fahrsteuerungsparameter bewegen, der den Schlitten (10) langsamer bewegt, als wenn er in Übereinstimmung mit dem ersten Fahrsteuerungsparameter bewegt wird, wenn das Bereitschaftssignal anzeigt, dass eine Vielzahl von Beförderungsanforderungen nicht in der Hauptsteuerung (150) zurückgehalten wird.

2. Fördersystem nach Anspruch 1, wobei das Bereitschaftssignal nur anzeigt, ob zu dem Zeitpunkt, zu dem das Bereitschaftssignal gesendet wird, eine zweite Förderanforderung vorliegt oder nicht.

3. Fördersystem nach Anspruch 1, wobei die ersten und zweiten Fahrsteuerungsparameter einen Parameter für die Beschleunigung/Verzögerung des Schlittens umfassen.

## Revendications

1. Système de transport (190) pour transporter une pièce (W) entre une étagère de stockage (2) et une pluralité de machines de traitement (1A, 1B), le système de transport (190) comprenant :
(i) un dispositif de commande principal (150) configuré pour recevoir une demande de transport pour une pièce (W) de la part de la pluralité de machines de traitement (1A, 1B), le dispositif de commande principal (150) étant configuré pour conserver la demande de transport reçue et transmettre un signal d'attente indiquant si une pluralité de demandes de transport sont conservées ou non dans le dispositif de commande principal (150), et
(ii) un dispositif de transport (100) configuré pour transporter la pièce (W) entre l'étagère de stockage (2) et la pluralité de machines de traitement (1A, 1B), le dispositif de transport (100) comprenant :
un chariot (10) configuré pour se déplacer entre l'étagère de stockage (2) et la pluralité de machines de traitement (1A, 1B), et
un dispositif de commande local (70, 160A, 160B, 170A, 170B) pour commander le chariot (10), dans lequel
le dispositif de commande local (70, 160A, 160B, 170A, 170B) du dispositif de transport (100) est configuré pour :
recevoir le signal d'attente du dispositif de commande principal (150),
déplacer le chariot (10) conformément à un premier paramètre de commande de déplacement lorsque le signal d'attente indique qu'une pluralité de demandes de transport sont conservées dans le dispositif de commande principal (150), et
déplacer le chariot (10) conformément à un second paramètre de commande de déplacement, qui déplace le chariot (10) plus lentement que lorsqu'il est déplacé conformément au premier paramètre de commande de déplacement, lorsque le signal d'attente indique qu'une pluralité de demandes de transport ne sont pas conservées dans le dispositif de commande principal (150).

2. Système de transport selon la revendication 1, dans lequel le signal d'attente indique seulement s'il existe ou non une seconde demande de transport au moment où le signal d'attente est envoyé.

3. Système de transport selon la revendication 1, dans lequel les premier et second paramètres de commande de déplacement comprennent un paramètre d'accélération/décélération du chariot.
